# EUROPEAN PATENT SPECIFICATION

(11) **EP 2 792 184 B1**
(45) Date of publication and mention of the grant of the patent: **18.05.2016**
(21) Application number: 11877409.0
(22) Date of filing: 14.12.2011
(51) Int. Cl.: H04W 24/02

(54) **RADIO BASE STATION INITIALIZATION**
FUNKBASISSTATIONSINITIALISIERUNG
INITIALISATION D'UNE STATION DE BASE RADIO

(43) Date of publication of application: 22.10.2014
(73) Proprietor: Telefonaktiebolaget LM Ericsson (publ), 164 83 Stockholm (SE)
(72) Inventor: NYLANDER, Tomas, S-139 34 Värmdö (SE); STÅLNACKE, Per-Daniel, S-167 65 Bromma (SE)
(74) Representative: Brann AB
(86) International application number: PCT/SE2011/051509
(87) International publication number: WO 2013/089601

(56) References cited:
- EP-A1- 1 947 811
- WO-A1-02/07467
- WO-A1-02/07467
- WO-A2-2008/042414
- JP-A- 2004 178 187
- US-A1- 2005 054 369
- US-A1- 2009 196 456
- US-A1- 2011 150 266
- US-A1- 2011 150 266

## Description

### TECHNICAL FIELD

Embodiments of the present invention presented herein generally relate to radio base station initialization. More particularly, embodiments disclosed herein relate to methods for assisting the initialization of a radio base station as well as methods for allowing the initialization of a radio base station. The disclosure also describes corresponding user equipments, radio base stations, computer programs and computer program products.

### BACKGROUND

When initializing a radio base station, the radio base station is generally not pre-configured with any information. Thus, it does not contain any information. As a consequence, the radio base station generally needs to be configured before it can operate normally. Therefore, the radio base stations generally need to connect to a management server, sometimes also referred to as an operation and management (O&M) server, or a similar server to get access to configuration data necessary for subsequent enablement of normal operation of the radio base station. In order to access this information from the O&M server, the radio base station must initially have some information about its O&M server, e.g. the identity of the O&M server and/or the (location) address of the O&M server.

The current solution to deal with this is to connect a laptop to the base station via a wired connection and manually enter the needed data to the radio base station via the user interface, normally the keypad, of the laptop. This is typically done at the site where the radio base station is to be physically located. Since the installation process requires manual input by someone, this is sometimes considered a security risk. Furthermore, manual input by human beings may be error prone. Yet further, this process requires fairly skilled personnel. That is, the personnel may need to have a detailed technical skill, e.g., about the installation process.

Furthermore, at present the industry wants to avoid pre-configuration of the radio base stations (e.g., in factories by the vendors or in delivery centers by either the vendors or the mobile operators) before the radio base stations are transported to the respective physical locations where these radio base stations are to be physically located. At the same time, there is a desire in the industry to keep costs down and/or to increase availability of manpower with as low skill and/or short training as possible. WO 02/07467 A1 relates to a system and method for initially configuring a node (e.g., base station or radio network controller) of a cellular telecommunications network. US 2011/150266 A1 relates to providing for automated setup of security and networking features.

### SUMMARY

In view of the above, an improved process for deploying new radio base stations would be advantageous and, in particular, a process allowing for a simplified deployment, cost-effectiveness, and/or enhanced security would be advantageous.
It is therefore a general object of embodiments of the present invention to mitigate, alleviate or eliminate one or more of the above-mentioned disadvantages and provide for improved radio base station initializations.

According to a first aspect, a method is provided for assisting the initialization of a radio base station. The method is performed in a user equipment. The user equipment may e.g. be a smartphone, a mobile phone or a cellphone. The method comprises: reading an optical representation of data associated with the radio base station, the optical representation of data being an identifier of the radio base station; obtaining a string of characters based on the read optical representation of data associated with the radio base station; generating an encryption key based on the obtained string of characters; establishing an encrypted wireless communication link with the radio base station using the generated encryption key; and communicating configuration data to the radio base station over the established encrypted wireless communication link. The configuration data comprises location data of the user equipment and the location data of the user equipment is a coarse indication of location of the radio base station. This means that configuration data can be sent over a wireless communication link, i.e. without a wired connection. Furthermore, this method can allow for configuration data to be sent to the radio base station involving no or very little manual input from the personnel performing the initializing of the radio base station. This provides for enhanced security during the initializing of the radio base station. Yet further, communicating with the radio base station over the encrypted wireless communication link may allow for enhanced security as it can make it possible to safeguard against a malicious user or unauthorized people from accessing the radio base station via the wireless communication link. Moreover, using a read optical representation of data as the identifier of radio base station eliminates the need of passwords needing manual input for establishing the encrypted wireless communication link.

In a preferred embodiment, the communication link is a wireless local area network, WLAN, communication link.

The above-mentioned configuration data may comprise a Public Land Mobile Network, PLMN, code as will be further detailed herin. In some embodiments, the method may also comprise obtaining location data for the user equipment and including the obtained location data into the configuration data.

In some embodiments, the step of reading the optical representation of data associated with the radio base station comprises reading a barcode. The barcode is, thus, the identifier of the radio base station.

In some embodiments, the string of characters comprises a serial number of the radio base station.

According to a second aspect, a method is provided for allowing the initialization of a radio base station. The method is performed in the radio base station. The radio base station may for example be a Base Transceiver Station (BTS) for GSM, a NodeB (NB) for UMTS, or an eNodeB (evolved NodeB, eNB) for LTE. The method comprises: obtaining a string of characters, the string of characters being an identifier of the radio base station; generating an encryption key based on the obtained string of characters; establishing an encrypted wireless communication link with a user equipment using the generated encryption key; and receiving configuration data from the user equipment over the established encrypted wireless communication link. The configuration data comprises location data of the user equipment and the location data of the user equipment is a coarse indication of location of the radio base station. This means that configuration data can be sent over a wireless communication link, i.e. without a wired connection.

Furthermore, this method can allow for configuration data to be sent to the radio base station involving no or very little manual input from the personnel performing the initializing of the radio base station. This provides for enhanced security during the initializing of the radio base station. Yet further, communicating with the radio base station over the encrypted wireless communication link may allow for enhanced security as it can make it possible to safeguard against a malicious user or unauthorized people from accessing the radio base station via the wireless communication link.

The communication link may be a wireless local area network, WLAN, communication link. The configuration data may comprise a Public Land Mobile Network, PLMN, code. Additionally, or alternatively, the configuration data may comprise location data of the user equipment.

The method may additionally comprise establishing communication with an operation and management, O&M, server to allow the O&M server to obtain additional input data to determine configuration data required to enable normal operation of the radio base station; and receiving the additional configuration data from the O&M server thereby enabling normal operation of the radio base station.

The user equipment may e.g. be a smartphone, mobile phone or cellphone.

According to a third aspect, a computer program is provided. The computer program is suitable for assisting the initialization of a radio base station. The computer program comprises computer program code which, when run in a processor of a user equipment, causes the user equipment to: obtain a string of characters based on a read optical representation of data associated with the radio base station; generate an encryption key based on the obtained string of characters; establish an encrypted wireless communication link with the radio base station using the generated encryption key; and communicate configuration data to the radio base station over the established encrypted wireless communication link. The configuration data comprises location data of the user equipment and the location data of the user equipment is a coarse indication of location of the radio base station.

The computer program may additionally comprise computer program code which, when run in the processor of a user equipment, causes the user equipment to read an optical representation of data associated with the radio base station, the optical representation of data being an identifier of the radio base station.

The computer program according to the third aspect allows for one or more of the earlier-mentioned advantages and/or effects.

According to a fourth aspect, a user equipment for assisting the initialization of a radio base station is provided. The user equipment comprises a reader arranged to read an optical representation of data associated with the radio base station, the optical representation of data being an identifier of the radio base station; a communication interface arranged for wireless communication; a processor; and a memory storing computer program comprising computer program code. When the computer program code is run in the processor, this causes the user equipment to: obtain a string of characters based on the read optical representation of data associated with the radio base station; generate an encryption key based on the obtained string of characters; establish, via the communication interface, an encrypted wireless communication link with the radio base station using the generated encryption key; and communicate configuration data to the radio base station over the established encrypted wireless communication link. The configuration data comprises location data of the user equipment and the location data of the user equipment is a coarse indication of location of the radio base station.

The user equipment according to the fourth aspect provides for one or more of the earlier-mentioned advantages and/or effects.

The reader may comprise a camera. In one embodiment, the reader is a barcode reader for reading a barcode associated with the radio base station. In another embodiment, the reader is a NeoReader for reading a barcode associated with the radio base station.

The user equipment may e.g. be a smartphone, a mobile phone or a cellphone. This means that the personnel performing the radio base station initializing do not have to bring a comparatively larger laptop to the site where the radio base station is to be deployed.

According to a fifth aspect, a radio base station is provided. The radio base station may for example be a Base Transceiver Station (BTS) for GSM, a NodeB (NB) for UMTS, or an eNodeB (evolved NodeB, eNB) for LTE. The radio base station comprises a communication interface arranged for wireless communication; a processor; and a memory storing computer program comprising computer program code. When the computer program code is run in the processor, this causes the radio base station to: obtain a string of characters, the string of characters being an identifier of the radio base station; generate an encryption key based on the obtained string of characters establish, via the communication interface, an encrypted wireless communication link with a user equipment; and receive configuration data from the user equipment over the established wireless encrypted communication link. The configuration data comprises location data of the user equipment and the location data of the user equipment is a coarse indication of location of the radio base station.

The communication interface may comprise a wireless local area network, WLAN, communication interface.

The radio base station according to the fifth aspect provides for one or more of the earlier-mentioned advantages and/or effects.

### BRIEF DESCRIPTION OF THE DRAWINGS

These and other aspects, features and advantages of the invention will be apparent and elucidated from the following description of embodiments of the present invention, reference being made to the accompanying drawings, in which:
Figure 1 is a schematic diagram illustrating an exemplary environment where embodiments presented herein can be applied;
Figure 2 is flow chart illustrating a method according to an embodiment of the invention;
Fig. 3 is a schematic diagram illustrating some modules of an embodiment of a user equipment;
Fig. 4 schematically shows one example of a computer program product comprising computer readable means;
Fig. 5 is a flow chart illustrating a method according to an embodiment of the invention;
Fig. 6 is a schematic diagram illustrating some modules of an embodiment of a radio base station; and
Fig. 7 schematically shows one example of a computer program product comprising computer readable means;

### DETAILED DESCRIPTION

The invention will now be described more fully hereinafter with reference to the accompanying drawings, in which certain embodiments of the invention are shown. The invention may, however, be embodied in many different forms and should not be construed as limited to the embodiments set forth herein; rather, these embodiments are provided by way of example so that this disclosure will be thorough and complete, and will fully convey the scope of invention to those persons skilled in the art. Like numbers refer to like elements throughout the description.

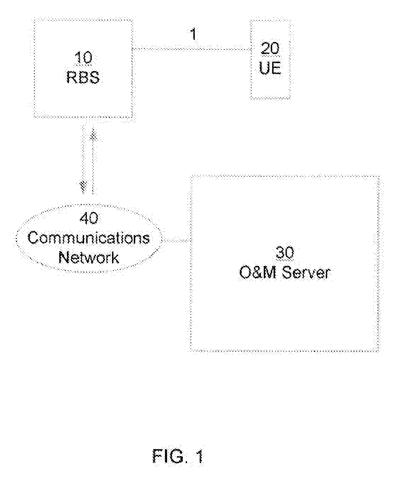

Fig 1 is a schematic diagram illustrating a possible environment where embodiments of the invention described herein can be applied. The illustrated components are all part of a communication network, e.g. complying with any or a combination of UMTS (Universal Mobile Telecommunications System), CDMA2000 (Code Division Multiple Access 2000), LTE (Long Term Evolution), GSM (Global System for Mobile Communications), WLAN (Wireless Local Area Network), etc.

A radio base station (hereinafter referred to as the RBS) 10 is responsible for one or more radio cells (not shown) for wireless communication with other nodes of the communication network. The person skilled in the art will appreciate that the term radio base station could mean a Base Transceiver Station (BTS) for GSM, a NodeB (NB) for UMTS or an eNodeB (evolved NodeB, eNB) for LTE.

During deployment of the RBS 10, the RBS 10 needs to be configured before it can operate normally, i.e. to serve traffic to and from user equipments and/or other nodes. This configuration can e.g. include hundreds of parameters. Furthermore, a software update can occur to ensure that the RBS 10 is up to date with the software and/or hardware state of the rest of the communications network.

The RBS 10 is connectable via a wireless communication link 1 to a user equipment (hereinafter referred to as UE) 20. The term user equipment is also known as mobile communication terminal, user terminal or mobile terminal. In preferred embodiments, the UE is a smartphone, mobile telephone or a cellphone. However, equally possible the UE could be a laptop computer or the like. Furthermore, the RBS 10 is communicatively connectable to an operation and management (O&M) server 30 via communications network 40.

With reference to Fig. 1, an exemplary RBS initialization process will be described. The purpose of this process is to initialize the RBS 10 that has not yet been configured.

In an initial step, typically but not necessarily performed at the site where the RBS 10 is to be physically located, an operator or user uses its UE 20 to read an optical representation of data from the RBS 10. The optical representation of data is an identifier of the RBS 10. In some embodiments, the optical representation of data may be a barcode, which is for example attached to a surface, typically a wall surface, of the RBS 10. To this end, the UE may be equipped with a reader, e.g. a barcode reader, operable to read the optical representation of data from the RBS 10.

Once the optical representation of data has been read by the UE 20, the UE 20 obtains a string of characters, e.g. a serial number of the RBS 10, based on the read optical representation of data. Since the optical representation of data, e.g. a barcode, of the RBS 10 is unique to the RBS 10, the obtained string of characters is also unique to the RBS 10.

Based on the obtained string of characters, the UE 20 generates an encryption key. Subsequently, an encrypted wireless link 1 is established between the UE 20 and the RBS 10. This communication link is typically, but not necessarily, a WLAN communication link. When WLAN connectivity has been established, the UE 20 may initiate IP (Internet Protocol) connectivity with the RBS 10 according to, e.g., IPv4 (Internet Protocol Version 4) or IPv6 (Internet Protocol Version 4) which protocols are known in the art and will therefore not be further explained here..

In some embodiments, it's not necessary that all communications between the UE 20 and the RBS 10 are encrypted. For example, in some embodiments it may be sufficient if only some data, e.g., the configuration data to be sent from the UE 20 to the RBS 10, is encrypted.

Communicating with the RBS 10 over the encrypted wireless communication link 1, using the formed, or generated, encryption key, for example based on the serial number of the RBS 10 can allow for enhanced security. This way, it can be possible to safeguard against a malicious user from accessing the RBS 10 via the wireless communication link 1.

Subsequently, the UE 20 can send configuration data to the RBS 10 over the established communication link. The configuration data may comprise a Public Land Mobile Network, PLMN, code. The PLMN code may comprise a Mobile Country Code (MCC) and Mobile Network Code (MNC). The PLMN code can thus uniquely identify the operator. Thus, once the PLMN code has been provided to the RBS 10, the RBS 10 will know the operator to which it belongs.

The configuration data to be sent from the UE 20 to the RBS 10 may be pre-configured into the UE 20, e.g. pre-stored in a memory of the UE 20. Alternatively, the configuration data could be part of a software package (also sometimes referred to as software application, application or APP) accessible for the UE 20 via a network, such as the Internet. Yet another option is that the UE 20 receives a software package such as an APP, where the APP comprises computer program having computer program means that, when executed in a processor of the UE 20, causes the UE 20 to prompt the user to input an internet URL (Uniform Resource Locator) address belonging to or pointing at a specific operator having radio base stations 10 to initialize. The APP may further comprise computer program having computer program means that, when executed in a processor of the UE 20, causes the UE 20 to i) contact a certain O&M server belonging to the operator performing the installation and to ii) allow the O&M server to communicate configuration data, e.g. comprising a PLMN code, to the UE 20.

Yet other alternatives to retrieve configuration data, e.g the PLMN code, exist. As a mere example, the UE 20 or, alternatively, an APP which is executable in a processor of the UE 20 may be capable of making use of the PLMN code already in use by the UE 20 itself. For example, if a certain mobile operator is to install radio base stations 10, the personnel performing the installation process generally has UEs 20 with a subscription belonging to this particular mobile operator. That is, a Subscriber Identity Module (SIM) card or the like that is associated with the mobile operator in question. In other words, the UE 20 belonging to the personnel is already operating using the correct PLMN code. This way, the UE, or alternatively the APP, can retrieve the PLMN information directly from the UE 20.

Additionally, the configuration data may comprise location data. For example, the UE 20 may be equipped with a location obtainer, e.g. a Global Positioning Service (GPS) unit, for obtaining location data of the UE 20. Typically, the UE 20 and RBS 10 are located in close proximity to each other and, consequently, the location or position of the UE 20 is a coarse indication of the location or position of the RBS 10. The location data may be used to simplify the connection of the RBS 10 to a proper O&M server 30. This may be important in countries which are supported by several O&M servers, for example, if the O&M servers are spread over a large geographical area and it may be important to connect the RBS 10 to an O&M server at as short distance as possible from the RBS 10. Furthermore, the obtained location data can be used as a fairly good indicator of the identity of the RBS 10. Persons skilled in the art will appreciate that other positioning methods, other than the GPS positioning method described here, are equally possible for obtaining location data.

Once the RBS 10 has received the configuration data, the RBS 10 will have all necessary information in order for it to connect to a proper O&M server 30 via communication network 40. Accordingly, the RBS 10 can establishing communications to a preferred O&M server (belonging to a correct operator) to allow the O&M server 30 to obtain additional input data to determine configuration data required to enable normal operation of the RBS 10. The O&M server 30 then provides the RBS 10 with any necessary additional configuration data for thereby enabling the RBS 10 to begin its operation, i.e. to serve traffic to and from other nodes of the communication network in which it is intended to operate. Communication of configuration data between the RBS 10 and the O&M server once the RBS 10 is known in the art and is generally vendor specific. The embodiments of the present invention can be implemented using any known manner of such communication of additional configuration data. Therefore, for sake of clarity this is not further presented herein.

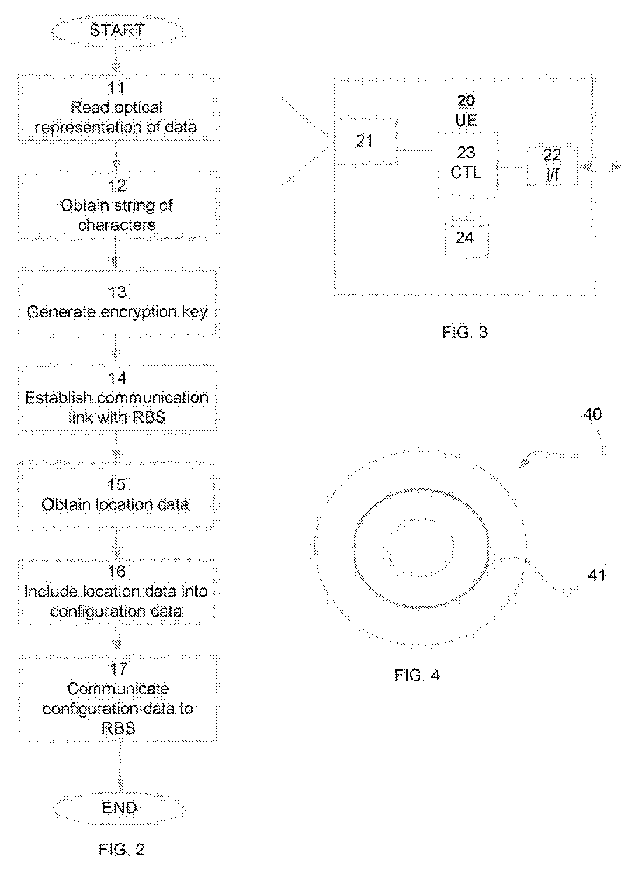

Fig. 2 is a flow chart illustrating a method according to one embodiment executed in UE 20 of Fig. 1. The purpose of the method is to assist the initialization of the RBS 10 of Fig. 1. In an initial read step 11, an optical representation of data associated with the radio base station is read by the UE 20. The optical representation of data, e.g. in the form of a barcode or the like as described hereinabove, is a unique identifier of the RBS 10. In an obtain string of characters step 12, a string of characters is obtained based on the optical representation of data that was read in the read step 11. This string of characters may comprise several characters. The string of characters is preferably, but not necessarily, a serial number of the RBS 10. The string of characters, e.g. the serial number, is unique for the RBS 10. In an encryption key generating step 13, an encryption key is generated based on the obtained string of characters. In a subsequent step 14, a wireless communication link is established with the RBS 10. Then, configuration data is communicated to the RBS 10 over the established wireless communication link in a communication step 17. This is performed in an encrypted manner using the encryption key that was generated in the earlier encryption key generating step 13. As was described in connection with Fig. 1, the configuration data may among other things comprise a Public Land Mobile Network, PLMN, code. Optionally, the method may additionally comprise a obtain location data step 15, during which step location data for the UE 10 is obtained. If the method comprises the optional obtain location data step 15, the method may further comprise a step 16 to include the thus obtained location data into the configuration data that is to be sent to the RBS in the communication step 17.

Fig. 3 is a schematic diagram illustrating some modules of an embodiment of the UE 20 of Fig. 1. The UE can e.g. be a smartphone, mobile phone or cellphone. A processor 23 is provided using any suitable central processing unit (CPU), microcontroller, digital signal processor (DSP), etc., capable of executing computer program comprising computer program code, the computer program being stored in a memory 24. The memory 24 can be any combination of read and write memory (RAM) and read only memory (ROM). The memory may also comprise persistent storage, which, for example, can be any single one or combination of magnetic memory, optical memory, or solid state memory or even remotely mounted memory. The UE may also comprise a reader 21, which is arranged to read an optical representation of data associated with the radio base station, the optical representation of data being an identifier of the radio base station. The reader 21 may comprise a camera. In some embodiments, the reader 21 can be implemented as a barcode reader for reading a barcode. Alternatively, the reader 21 could be implemented as NeoReader. A NeoReader is a software application that is accessible for and downloadable to UEs and that allows UEs to be used as a barcode scanner. The UE 20 further comprises a communication interface 22 arranged for wireless communication, such as WLAN communication, with the RBS 10. When the above-mentioned computer program code is run in the processor 23 of the UE 23, this causes the UE 23 to obtain a string of characters based on a read optical representation of data that has been read by reader 21, generate an encryption key based on the obtained string of characters, establish a wireless communication link with the RBS 10 via the communication interface 22, and communicate configuration data to the radio base station over the established wireless communication link. The step of communicating configuration data is performed in an encrypted manner using the generated encryption key. If the reader 21 is implemented in the form of a NeoReader, the above-mentioned computer program may further comprise computer program code, which when run in the processor 23 of the UE 20, causes the UE 20 to read the optical representation of data associated with the RBS 10.

Fig. 4 schematically shows one example of a computer program product 40 comprising computer readable means 41. On this computer readable means 41, a computer program can be stored, which computer program, when run on the processor 23 of the UE 20, can cause the UE to execute the method according to various embodiments described in the present disclosure. In this example, the computer program product is an optical disc, such as a CD (compact disc), a DVD (digital versatile disc) or a blue-ray. The computer-readable means can also be solid state memory, such as flash memory or a software package (also sometimes referred to as software application, application or APP) distributed over a network, such as the Internet.

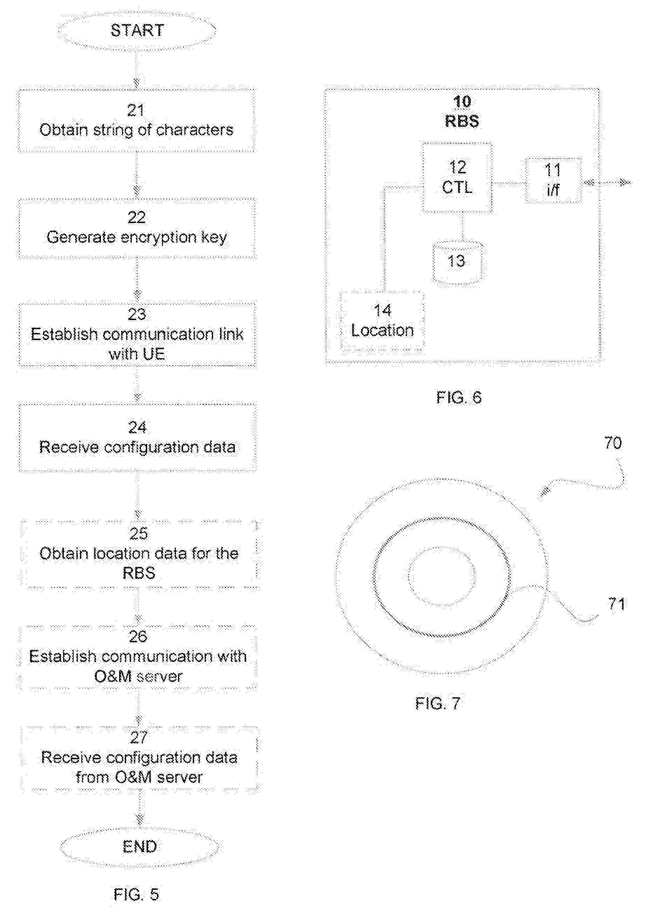

Fig. 5 is a flow chart illustrating a method according to one exemplary embodiment executed in RBS 10 of Fig. 1. The purpose of the method is to allow for the initialization of the RBS 10. The RBS may be any node for use in a communications network such as a BTS, NodeB, or eNodeB. In an initial step 21, a string of characters is obtained. The string of characters is a unique identifier of the RBS 10. The string of characters may comprise several characters. Furthermore, the string of characters may be the serial number of the RBS 10. In an encryption key generating step 22, an encryption key is generated based on the string of characters, e.g. the serial number of the RBS 10. In a subsequent step 23, an encrypted wireless communication link is established with the UE 20. In some embodiments, the step 23 of establishing the encrypted wireless communication link means that the RBS 10 waits for an incoming connection request from the UE 10. Once the RBS 10 receives such a connection request from the UE, it will subsequently be capable of establishing the connection, or wireless communication link 1, with the UE 20. This wireless communication link is preferably, but not necessarily, a WLAN communication link as described hereinabove with reference to Fig. 1. Thereafter, configuration data is received, in a receiving step 24, from the UE 20 over the established wireless communication link 1. The configuration data can be communicated in an encrypted manner using the generated encryption key over the established wireless communication link 1. Thus, the receiving step is performed in an encrypted manner. As was described earlier, the configuration data may among other things comprise a Public Land Mobile Network, PLMN, code. Additionally, the received configuration data may comprise location data of the UE 20 and optionally other additional data as well. Optionally, the method may comprise a obtain location data step 25, during which step location data for the RBS 10 is obtained. Thus, instead of receiving location data of the UE 20 from the UE 20, the RBS 10 may itself obtain location data for the RBS 10. In a subsequent step 26, the RBS 10 establishes communication with an O&M server to allow the O&M server to obtain additional input data to determine the configuration data required to enable normal operation of the radio base station. Thereafter, the RBS 10 can receive any additional configuration data from the O&M server for thereby enabling starting of and, subsequent, normal operation of the radio base station.

Fig. 6 is a schematic diagram illustrating some modules of an embodiment of the RBS 10 of Fig. 1. As mentioned hereinabove, the RBS 10 may for example be a BTS, NodeB, or eNodeB. A processor 12 is provided using any suitable central processing unit (CPU), microcontroller, digital signal processor (DSP), etc., capable of executing computer program comprising computer program code, the computer program being stored in a memory 13. The memory 13 can be any combination of read and write memory (RAM) and read only memory (ROM). The memory may also comprise persistent storage, which, for example, can be any single one or combination of magnetic memory, optical memory, or solid state memory or even remotely mounted memory. The RBS further comprises a communication interface 11 arranged for wireless communication, such as WLAN communication, with the UE 20. When the above-mentioned computer program code is run in the processor 12 of the RBS 10, this causes the RBS 10 to generate an encryption key based on the obtained string of characters, to establish a wireless communication link with the UE 20 via the communication interface 11, and to receive configuration data from the user equipment over the established wireless communication link. In some embodiments, the RBS 10 is arranged to wait for an incoming connection request from the UE 10 and, furthermore, to establish the wireless communication link 1 upon having received such connection request. The receiving is performed in an encrypted manner using the generated encryption key. The RBS 10 may also optionally comprise a location obtainer 14 arranged to obtain location data for the radio base station. The location obtainer 14 may, e.g., be a GPS unit or the like.

Fig. 7 schematically shows one example of a computer program product 70 comprising computer readable means 71. On this computer readable means 71, a computer program can be stored, which computer program, when run on the processor 12 of the RBS 10, can cause the RBS 10 to execute the method according to various embodiments described in the present disclosure. In this example, the computer program product is an optical disc, such as a CD (compact disc), a DVD (digital versatile disc) or a blue-ray. The computer-readable means can also be solid state memory, such as flash memory or a software package distributed over a network, such as the Internet.

Various embodiments of the invention described hereinabove allow for a simplified deployment of new radio base stations. Some of the disclosed embodiments allow for initializations of radio base stations without the need for a laptop computer on site. A user equipment in the form of e.g. a smart phone, mobile phone or cellphone is generally smaller in size, compared to a laptop computer, and are therefore easier to bring to the site where the radio base station is to be initialized. Furthermore, using a wireless communication link instead of a wired connection eliminates the need of a wireless cable at site, which in turn simplifies the initialization process for the personnel performing the initializing of the RBS. Yet further, instead of manually inputting data via a laptop keyboard, some embodiments of the invention allow for reading a RBS unique data representation. Communicating with the RBS 10 over the encrypted wireless communication link 1, using the formed, or created encryption key, based on the unique data representation (e.g. in the form of the serial number of the RBS 10) can allow for enhanced security. In conclusion, various embodiments of the invention allows for a simplified process for the personnel when initializing a new radio base station, yet in a secure manner.

The inventors of the various embodiments of this invention have realized that the embodiments of the present invention may be especially interesting in future communication networks, such as in heterogeneous network (HetNets). Currently, mobile-broadband traffic is increasing. In parallel, new consumer trends are raising expectations for higher data rates in both the uplink and the downlink. Creating a HetNet by introducing low power nodes is an attractive approach to meeting these traffic demands and performance expectations. This trend suggests that there will be a high number of low power nodes in the future. Due to the expected higher number of nodes that will need to be initialized, the deployment and related configurations of such nodes should preferably be as simple as possible. Since the various embodiments of the present invention allow for a simplified, yet secure, initialization of nodes, it is believed that the various embodiments of the invention will become an attractive solution for initializing new nodes in the future, e.g. nodes to be deployed in the future HetNets.

Although the present invention has been described above with reference to specific embodiments, it is not intended to be limited to the specific form set forth herein. Rather, the invention is limited only by the accompanying claims and, other embodiments that the specific above are equally possible within the scope of the these appended claims. For example, while the radio base station (RBS) has been exemplified as a BTS, NodeB or eNodeB, a person skilled in the art will realize that the principles of embodiments of the invention are applicable in other communication systems as well, e.g., such that the RBS is used to mean a WLAN/WiFi access point, Home NodeB (HNB) or an Home eNodeB (HeNB).

In the claims, the term "comprise/comprises" does not exclude the presence of other elements or steps. Furthermore, although individual features may be included in different claims, these may possibly advantageously be combined, and the inclusion of different claims does not imply that a combination of features is not feasible and/or advantageous. In addition, singular references do not exclude a plurality. Reference signs in the claims are provided merely as a clarifying example and should not be construed as limiting the scope of the claims in any way.

## Claims

1. A method for assisting the initialization of a radio base station, the method being performed in a user equipment and comprising the steps of:
reading (11) an optical representation of data associated with the radio base station, the optical representation of data being an identifier of the radio base station;
obtaining (12) a string of characters based on the read optical representation of data associated with the radio base station;
generating (13) an encryption key based on the obtained string of characters;
establishing (14) an encrypted wireless communication link with the radio base station using the generated encryption key; and
communicating (17) configuration data to the radio base station over the established encrypted wireless communication link, wherein the configuration data comprises location data of the user equipment, where the location data of the user equipment is a coarse indication of location or position of the radio base station.

2. The method according to claim 1, wherein the communication link is a wireless local area network, WLAN, communication link.

3. The method according to claim 1 or 2, wherein the configuration data comprises a Public Land Mobile Network, PLMN, code.

4. The method according to any of the claims 1-3, further comprising:
obtaining (15) the location data of the user equipment; and
including (16) the obtained location data into the configuration data.

5. The method according to any of the claims 1-4, wherein reading the optical representation of data associated with the radio base station comprises reading a barcode, wherein the barcode is the identifier of the radio base station.

6. The method according to any of the claims 1-5, wherein the string of characters is a serial number of the radio base station.

7. The method according to any of the claims 1-6, wherein the user equipment is a smartphone, mobile phone or cellphone.

8. A method for allowing the initialization of a radio base station, the method being performed in the radio base station, and comprising the steps of:
obtaining (21) a string of characters, the string of characters being an identifier of the radio base station;
generating (22) an encryption key based on the obtained string of characters;
establishing (23) an encrypted wireless communication link with a user equipment using the generated encryption key; and
receiving (24) configuration data from the user equipment over the established encrypted wireless communication link, wherein the configuration data comprises location data of the user equipment, where the location data of the user equipment is a coarse indication of location or position of the radio base station.

9. The method according to claim 8, further comprising:
establishing (26) communication with an operation and management, O&M, server to allow the O&M server to obtain additional configuration data required to enable normal operation of the radio base station; and
receiving (27) the additional configuration data from the O&M server thereby enabling normal operation of the radio base station.

10. A computer program (41) for assisting the initialization of a radio base station, the computer program comprising computer program code which, when run in a processor of a user equipment, causes the user equipment to:
obtain a string of characters based on a read optical representation of data associated with the radio base station;
generate an encryption key based on the obtained string of characters;
establish an encrypted wireless communication link with the radio base station using the generated encryption key; and
communicate configuration data to the radio base station over the established encrypted wireless communication link, wherein the configuration data comprises location data of the user equipment, where the location data of the user equipment is a coarse indication of location or position of the radio base station.

11. The computer program (41) according to claim 10, wherein the computer program further comprises computer program code which, when run in the processor of a user equipment, causes the user equipment to:
read an optical representation of data associated with the radio base station, the optical representation of data being an identifier of the radio base station.

12. A user equipment (20) for assisting the initialization of a radio base station, comprising:
a reader (21) arranged to read an optical representation of data associated with the radio base station, the optical representation of data being an identifier of the radio base station;
a communication interface (22) arranged for wireless communication;
a processor (23); and
a memory (24) storing computer program comprising computer program code which, when run in the processor (23), causes the user equipment (20) to:
obtain a string of characters based on the read optical representation of data associated with the radio base station;
generate an encryption key based on the obtained string of characters;
establish, via the communication interface (22), an encrypted wireless communication link with the radio base station using the generated encryption key; and
communicate configuration data to the radio base station over the established encrypted wireless communication link, wherein the configuration data comprises location data of the user equipment, where the location data of the user equipment is a coarse indication of location or position of the radio base station.

13. The user equipment (20) according to claim 12, wherein the reader (21) is a barcode reader for reading a barcode associated with the radio base station.

14. The user equipment according to claim 12, wherein the reader (21) is a NeoReader for reading a barcode associated with the radio base station.

15. A radio base station (10), comprising:
a communication interface (11) arranged for wireless communication;
a processor (12); and
a memory (13) storing computer program comprising computer program code which, when run in the processor (12), causes the radio base station (10) to:
obtain a string of characters, the string of characters being an identifier of the radio base station;
generate an encryption key based on the obtained string of characters;
establish, via the communication interface (11), an encrypted wireless communication link with a user equipment; and
receive configuration data from the user equipment over the established wireless encrypted communication link, wherein the configuration data comprises location data of the user equipment, where the location data of the user equipment is a coarse indication of location or position of the radio base station.

## Patentansprüche

1. Verfahren zur Unterstützung der Initialisierung einer Funkbasisstation, wobei das Verfahren in einem Benutzergerät ausgeführt wird und die folgenden Schritte umfasst:
Ablesen (11) einer optischen Darstellung von der Funkbasisstation zugehörigen Daten, wobei die optische Datendarstellung ein Identifier der Funkbasisstation ist;
Abrufen (12) einer Zeichenkette basierend auf der abgelesenen optischen Darstellung von der Funkbasisstation zugehörigen Daten;
Erzeugen (13) eines Verschlüsselungscodes basierend auf der abgerufenen Zeichenkette;
Aufbauen (14) eines verschlüsselten kabellosen Kommunikationslinks zu der Funkbasisstation mithilfe des erzeugten Verschlüsselungscodes; und
Kommunizieren (17) von Konfigurationsdaten an die Funkbasisstation über den aufgebauten verschlüsselten kabellosen Kommunikationslink, wobei die Konfigurationsdaten Standortdaten des Benutzergeräts umfassen, wobei die Standortdaten des Benutzergeräts eine grobe Anzeige des Standorts bzw. der Position der Funkbasisstation sind.

2. Verfahren nach Anspruch 1, wobei der Kommunikationslink ein WLAN- (Wireless Local Area Network)-Kommunikationslink ist.

3. Verfahren nach Anspruch 1 oder 2, wobei die Konfigurationsdaten einen PLMN- (Public Land Mobile Network)-Code umfassen.

4. Verfahren nach einem der Ansprüche 1-3, ferner Folgendes umfassend:
Abrufen (15) der Standortdaten des Benutzergeräts; und
Einbeziehen (16) der abgerufenen Standortdaten in die Konfigurationsdaten.

5. Verfahren nach einem der Ansprüche 1-4, wobei das Ablesen der optischen Darstellung von der Funkbasisstation zugehörigen Daten das Ablesen eines Balkencodes umfasst, wobei der Balkencode der Identifier der Funkbasisstation ist.

6. Verfahren nach einem der Ansprüche 1-5, wobei die Zeichenkette eine Seriennummer der Funkbasisstation ist.

7. Verfahren nach einem der Ansprüche 1-6, wobei das Benutzergerät ein Smartphone, Mobiltelefon oder Handy ist.

8. Verfahren zum Ermöglichen der Initialisierung einer Funkbasisstation, wobei das Verfahren in der Funkbasisstation ausgeführt wird und die folgenden Schritte umfasst:
Abrufen (21) einer Zeichenkette, wobei die Zeichenkette ein Identifier der Funkbasisstation ist;
Erzeugen (22) eines Verschlüsselungscodes basierend auf der abgerufenen Zeichenkette;
Aufbauen (23) eines verschlüsselten kabellosen Kommunikationslinks zu der Funkbasisstation mithilfe des erzeugten Verschlüsselungscodes; und
Empfangen (24) von Konfigurationsdaten von dem Benutzergerät über den aufgebauten verschlüsselten kabellosen Kommunikationslink, wobei die Konfigurationsdaten Standortdaten des Benutzergeräts umfassen, wobei die Standortdaten des Benutzergeräts eine grobe Anzeige des Standorts bzw. der Position der Funkbasisstation sind.

9. Verfahren nach Anspruch 8, ferner Folgendes umfassend:
Aufbauen (26) einer Kommunikation mit einem O&M- (Operation and Management)-Server, um es dem O&M-Server zu ermöglichen, zusätzliche Konfigurationsdaten abzurufen, die zum Ermöglichen eines normalen Betriebs der Funkbasisstation notwendig sind; und
Empfangen (27) der zusätzlichen Konfigurationsdaten vom O&M-Server, wodurch ein normaler Betrieb der Funkbasisstation ermöglicht wird.

10. Computerproramm (41) zur Unterstützung der Initialisierung einer Funkbasisstation, wobei das Computerprogramm einen Computerprogrammcode umfasst, der bei Ablauf in einem Prozessor eines Benutzergeräts das Benutzergerät zu Folgendem veranlasst:
Abrufen einer Zeichenkette basierend auf einer abgelesenen optischen Darstellung von der Funkbasisstation zugehörigen Daten;
Erzeugen eines Verschlüsselungscodes basierend auf der abgerufenen Zeichenkette;
Aufbauen eines verschlüsselten kabellosen Kommunikationslinks zu der Funkbasisstation mithilfe des erzeugten Verschlüsselungscodes; und
Kommunizieren von Konfigurationsdaten an die Funkbasisstation über den aufgebauten verschlüsselten kabellosen Kommunikationslink, wobei die Konfigurationsdaten Standortdaten des Benutzergeräts umfassen, wobei die Standortdaten des Benutzergeräts eine grobe Anzeige des Standorts bzw. der Position der Funkbasisstation sind.

11. Computerprogramm (41) nach Anspruch 10, wobei das Computerprogramm ferner einen Computerprogrammcode umfasst, der bei Ablauf in dem Prozessor eines Benutzergeräts das Benutzergerät zu Folgendem veranlasst:
Ablesen einer optischen Darstellung von der Funkbasisstation zugehörigen Daten, wobei die optische Datendarstellung ein Identifier der Funkbasisstation ist.

12. Benutzergerät (20) zur Unterstützung der Initialisierung einer Funkbasisstation, Folgendes umfassend:
einen Leser (21), der dazu ausgestaltet ist, eine optische Darstellung von Daten zu lesen, die der Funkbasisstation zugehörig sind, wobei die optische Datendarstellung ein Identifier der Funkbasisstation ist;
eine Kommunikationsschnittstelle (22), die zur kabellosen Kommunikation ausgestaltet ist;
einen Prozessor (23); und
einen Speicher (24), der ein Computerprogramm speichert, das einen Computerprogrammcode speichert, welcher bei Ablauf in dem Prozessor (23), das Benutzergerät (20) zu Folgendem veranlasst:
Abrufen einer Zeichenkette basierend auf der abgelesenen optischen Darstellung von der Funkbasisstation zugehörigen Daten;
Erzeugen eines Verschlüsselungscodes basierend auf der abgerufenen Zeichenkette;
Aufbauen, über die Kommunikationsschnittstelle (22), eines verschlüsselten kabellosen Kommunikationslinks zu der Funkbasisstation mithilfe des erzeugten Verschlüsselungscodes; und
Kommunizieren von Konfigurationsdaten an die Funkbasisstation über den aufgebauten verschlüsselten kabellosen Kommunikationslink, wobei die Konfigurationsdaten Standortdaten des Benutzergeräts umfassen, wobei die Standortdaten des Benutzergeräts eine grobe Anzeige des Standorts bzw. der Position der Funkbasisstation sind.

13. Benutzergerät (20) nach Anspruch 12, wobei der Leser (21) ein Balkencodeleser zum Ablesen eines der Funkbasisstation zugehörigen Balkencodes ist.

14. Benutzergerät nach Anspruch 12, wobei der Leser (21) ein NeoReader zum Ablesen eines der Funkbasisstation zugehörigen Balkencodes ist.

15. Funkbasisstation (10), Folgendes umfassend:
eine Kommunikationsschnittstelle (11), die zur kabellosen Kommunikation ausgestaltet ist;
einen Prozessor (12); und
einen Speicher (13), der ein Computerprogramm speichert, das einen Computerprogrammcode speichert, welcher bei Ablauf in dem Prozessor (12), das Benutzergerät (10) zu Folgendem veranlasst:
Abrufen einer Zeichenkette basierend auf der abgelesenen optischen Darstellung von der Funkbasisstation zugehörigen Daten;
Erzeugen eines Verschlüsselungscodes basierend auf der abgerufenen Zeichenkette;
Aufbauen, über die Kommunikationsschnittstelle (11), eines verschlüsselten kabellosen Kommunikationslinks zu einem Benutzergerät; und
Empfangen von Konfigurationsdaten von dem Benutzergerät über den aufgebauten verschlüsselten kabellosen Kommunikationslink, wobei die Konfigurationsdaten Standortdaten des Benutzergeräts umfassen, wobei die Standortdaten des Benutzergeräts eine grobe Anzeige des Standorts bzw. der Position der Funkbasisstation sind.

## Revendications

1. Procédé pour l'assistance à l'initialisation d'une station de base radio, le procédé étant effectué dans un équipement utilisateur et comprenant les étapes suivantes :
la lecture (11) d'une représentation optique de données associées à la station de base radio, la représentation optique de données étant un identificateur de la station de base radio ;
l'obtention (12) d'une chaîne de caractères sur la base de la représentation optique lue de données associées à la station de base radio ;
la génération (13) d'une clé de chiffrement sur la base de la chaîne de caractères obtenue ;
l'établissement (14) d'une liaison de communication sans fil chiffrée avec la station de base radio en utilisant la clé de chiffrement générée ; et
la communication (17) de données de configuration à la station de base radio sur la liaison de communication sans fil chiffrée établie, dans lequel les données de configuration comprennent des données de localisation de l'équipement utilisateur, où les données de localisation de l'équipement utilisateur sont une indication grossière de l'emplacement ou la position de la station de base radio.

2. Procédé selon la revendication 1, dans lequel la liaison de communication est une liaison de communication de réseau local sans fil, WLAN.

3. Procédé selon la revendication 1 ou 2, dans lequel les données de configuration comprennent un code de réseau mobile terrestre public, PLMN.

4. Procédé selon l'une quelconque des revendications 1 à 3, comprenant en outre :
l'obtention (15) de données de localisation de l'équipement utilisateur ; et
l'inclusion (16) des données de localisation obtenues dans les données de configuration.

5. Procédé selon l'une quelconque des revendications 1 à 4, dans lequel la lecture de la représentation optique de données associées à la station de base radio comprend la lecture d'un code à barres, dans lequel le code à barres est l'identificateur de la station de base radio.

6. Procédé selon l'une quelconque des revendications 1 à 5, dans lequel la chaîne de caractères est un numéro de série de la station de base radio.

7. Procédé selon l'une quelconque des revendications 1 à 6, dans lequel l'équipement utilisateur est un téléphone intelligent, un téléphone mobile ou un téléphone cellulaire.

8. Procédé d'assistance à l'initialisation d'une station de base radio, le procédé étant effectué dans la station de base radio et comprenant les étapes suivantes :
l'obtention (21) d'une chaîne de caractères, la chaîne de caractères étant un identificateur de la station de base radio ;
la génération (22) d'une clé de chiffrement sur la base de la chaîne de caractères obtenue ;
l'établissement (23) d'une liaison de communication sans fil chiffrée avec un équipement utilisateur en utilisant la clé de chiffrement générée ; et
la réception (24) de données de configuration à partir de l'équipement utilisateur sur la liaison de communication sans fil chiffrée établie, dans lequel les données de configuration comprennent des données de localisation de l'équipement utilisateur, où les données de localisation de l'équipement utilisateur sont une indication grossière de l'emplacement ou la position de la station de base radio.

9. Procédé selon la revendication 8, comprenant en outre :
l'établissement (26) d'une communication avec un serveur de gestion et d'exploitation, O&M, pour permettre au serveur O&M d'obtenir des données de configuration additionnelles nécessaires pour permettre un fonctionnement normal de la station de base radio ; et
la réception (27) des données de configuration additionnelles à partir du serveur O&M en permettant ainsi un fonctionnement normal de la station de base radio.

10. Programme informatique (41) pour l'assistance à l'initialisation d'une station de base radio, le programme informatique comprenant un code de programme informatique qui, quand il est exécuté dans un processeur d'un équipement utilisateur, force l'équipement utilisateur à :
obtenir une chaîne de caractères sur la base d'une représentation optique lue de données associées à la station de base radio ;
générer une clé de chiffrement sur la base de la chaîne de caractères obtenue ;
établir une liaison de communication sans fil chiffrée avec la station de base radio en utilisant la clé de chiffrement générée ; et
communiquer des données de configuration à la station de base radio sur la liaison de communication sans fil chiffrée établie, dans lequel les données de configuration comprennent des données de localisation de l'équipement utilisateur, où les données de localisation de l'équipement utilisateur sont une indication grossière de l'emplacement ou la position de la station de base radio.

11. Programme informatique (41) selon la revendication 10, dans lequel le programme informatique comprend en outre un code de programme informatique qui, quand il est exécuté dans un processeur d'un équipement utilisateur, force l'équipement utilisateur à :
lire une représentation optique de données associées à la station de base radio, la représentation optique de données étant un identificateur de la station de base radio.

12. Équipement utilisateur (20) pour l'assistance à l'initialisation d'une station de base radio, comprenant :
un lecteur (21) agencé pour lire une représentation optique de données associées à la station de base radio, la représentation optique de données étant un identificateur de la station de base radio ;
une interface de communication (22) agencée pour une communication sans fil ;
un processeur (23) ; et
une mémoire (24) stockant un programme informatique comprenant un code de programme informatique qui, quand il est exécuté dans le processeur (23), force l'équipement utilisateur (20) à :
obtenir une chaîne de caractères sur la base de la représentation optique lue de données associées à la station de base radio ;
générer une clé de chiffrement sur la base de la chaîne de caractères obtenue ;
établir, via l'interface de communication (22), une liaison de communication sans fil chiffrée avec la station de base radio en utilisant la clé de chiffrement générée ; et
communiquer des données de configuration à la station de base radio sur la liaison de communication sans fil chiffrée établie, dans lequel les données de configuration comprennent des données de localisation de l'équipement utilisateur, où les données de localisation de l'équipement utilisateur sont une indication grossière de l'emplacement ou la position de la station de base radio.

13. Équipement utilisateur (20) selon la revendication 12, dans lequel le lecteur (21) est un lecteur de code à barres pour lire un code à barres associé à la station de base radio.

14. Équipement utilisateur selon la revendication 12, dans lequel le lecteur (21) est un NeoReader pour lire un code à barres associé à la station de base radio.

15. Station de base radio (10) comprenant :
une interface de communication (11) agencée pour une communication sans fil ;
un processeur (12) ; et
une mémoire (13) stockant un programme informatique comprenant un code de programme informatique qui, quand il est exécuté dans le processeur (12), force la station de base radio (10) à :
obtenir une chaîne de caractères, la chaîne de caractères étant un identificateur de la station de base radio ;
générer une clé de chiffrement sur la base de la chaîne de caractères obtenue ;
établir, via l'interface de communication (11), une liaison de communication sans fil chiffrée avec un équipement utilisateur ; et
recevoir des données de configuration à partir de l'équipement utilisateur sur la liaison de communication sans fil chiffrée établie, dans lequel les données de configuration comprennent des données de localisation de l'équipement utilisateur, où les données de localisation de l'équipement utilisateur sont une indication grossière de l'emplacement ou la position de la station de base radio.
